(19) Europäisches Patentamt
European Patent Office
Office européen des brevets

(11) EP 1 354 898 B1

(12) # EUROPEAN PATENT SPECIFICATION

(45) Date of publication and mention of the grant of the patent:
**26.04.2006 Bulletin 2006/17**

(21) Application number: **01958579.3**

(22) Date of filing: **28.08.2001**

(51) Int Cl.:
***C08F 230/08*** *(2006.01)* ***G02B 1/04*** *(2006.01)*

(86) International application number:
**PCT/JP2001/007389**

(87) International publication number:
**WO 2002/020631 (14.03.2002 Gazette 2002/11)**

(54) **MONOMER COMPOSITION, POLYMER OBTAINED THEREFROM, AND OCULAR LENS**

MONOMERZUSAMMENSETZUNG, DARAUS ERHALTENES POLYMER UND OKULARLINSE

COMPOSITION MONOMERE, POLYMERE OBTENU A PARTIR DE CELLE-CI, ET LENTILLES OCULAIRES

(84) Designated Contracting States:
**DE FR GB IE IT**

(30) Priority: **05.09.2000 JP 2000268119**

(43) Date of publication of application:
**22.10.2003 Bulletin 2003/43**

(73) Proprietor: **Johnson & Johnson Vision Care, Inc.**
**Jacksonville, FL 32256 (US)**

(72) Inventors:
- **NAKAMURA, Masataka**
  **Otsu-shi, Shiga 520-0846 (JP)**
- **YOKOTA, Mitsuru**
  **Otsu-shi, Shiga 520-0804 (JP)**
- **SHIMOYAMA, Naoki**
  **Otsu-shi, Shiga 520-0845 (JP)**

(74) Representative: **Fisher, Adrian John et al**
**CARPMAELS & RANSFORD**
**43-45 Bloomsbury Square**
**London WC1A 2RA (GB)**

(56) References cited:

| | |
|---|---|
| EP-A- 0 295 947 | JP-A- 4 332 760 |
| JP-A- 61 087 102 | JP-A- 63 301 919 |
| JP-A- 2000 191 730 | JP-A- 2001 048 939 |
| JP-A- 2001 233 915 | US-A- 4 433 125 |
| US-A- 5 714 557 | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 354 898 B1

## Description

## Technical Field

This invention relates to monomers, polymers and ophthalmic lenses in which they are used. This invention is particularly suited to use in ophthalmic lenses such as contact lenses, intraocular lenses and artificial corneas.

## Background of the Invention

In recent years, silicone polymer segments, hydrophilic polymer segments (such as polyethylene glycol) and so-called macromonomers having polymeriable groups have been used as material for ophthalmic lenses for achieving both high oxygen permeability and high water content (USP5760100, USP 5776999). However, because macromonomer type materials have excessively high molecular weights, there have been the problems that purification is difficult and that they are not stable. Further, there is also the problem that it is difficult to obtain polymers of a low modulus of elasticity from macromonomer type materials.

On the other hand, 3-methacryloxypropyltris (trimethylsiloxy) silane has been widely used as a material for ophthalmic lenses as a monomer of low molecular weight that is not a macromonomer [Japanese Patent Application Laid-Open No. 60(1985)-I42324 and Japanese Patent Application Laid-Open No. 54(1979)-24047]. 3-Methacryloxypropyltris (trimethylsiloxy) silane has the merit of providing high oxygen permeability. However, because 3-methacryloxypropyltris (trimethylsiloxy) silane has essentially no hydrophilic properties, polymers that are obtained from it have a low water content. This is not desirable for ophthalmic lenses. Further, polymers that are obtained from 3-methacryloxypropyltris (trimethylsiloxy) silane have a comparatively high modulus of elasticity so that it is difficult to use them for soft contact lenses.

On the other hand, monomers that are represented by general formula (ml-2) below are described, for example, in Japanese Patent Publication No. 56(1981)-39450 and Japanese Patent Publication No. 56(1981)-40324.

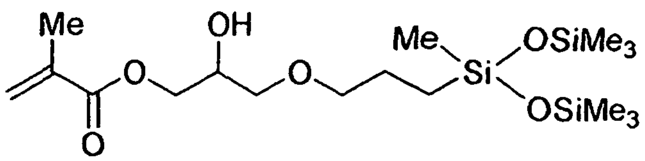

(m1-2)

The polymers that are obtained by polymerizing this monomer have the merits that they have comparatively high oxygen permeability and that they have a comparatively low modulus of elasticity. However, in recent years, polymers for use as ophthalmic lenses have come to require high oxygen permeability in order to make it possible to wear them continuously for long periods of time and the oxygen permeability of polymers for ophthalmic lenses that are obtained from monomers of formula (ml-2) is insufficient.

## Disclosure of the Invention

This invention has the objective of solving these problems and of providing monomer compositions with which polymers of a superior balance of physical properties such as high oxygen permeability, high water content and a low modulus of elasticity can be obtained. It has the further objective of providing polymers and ophthalmic lenses comprised of said monomers.

In order to achieve the aforementioned objectives, the monomers of this invention and the polymers and ophthalmic lenses in which they are used have the structure described below.

When Q and Z are defined as follows:-- it is a monomer composition that includes monomer (M1), in which Q is 0.1 or greater, Z is 1 or greater and which has a molecular weight of less than 700, monomer (M2), in which Q is 0.2 or greater, Z = 0 and which has a molecular weight of less than 700, and hydrophilic monomer (M3), in which Q = 0 and which has a molecular weight of less than 700, and in which M1 : M2: M3 is 100 parts by weight: (10 to 1000 parts by weight): (10 to 1000 parts by weight).

Q = (mass of Si atoms in 1 molecule of monomer) / (molecular weight of monomer)

Z = (number of ether oxygens in 1 molecule of monomer) + (number of hydroxyl groups in 1 molecule of monomer)

**Detailed Description of the Invention**

We shall now describe the mode for execution of this invention.

In this invention, oxygen permeability tends to increase because the content of silicon atoms increases when Q is large and oxygen permeability tends to decrease when Q is low.

Further, Z is the sum of ether oxygens and the number of hydroxyl groups in the hydrophilic group. Therefore, hydrophilic property increases when Z is high and hydrophilic property tends to decrease when Z is low.

First, we shall present specific examples of the monomer (M1). They include the monomers represented by the formulas (m1-1) to (m1-36) below.

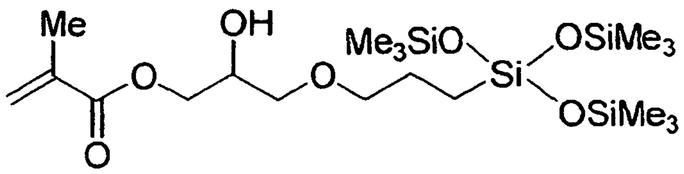

(m1-1)

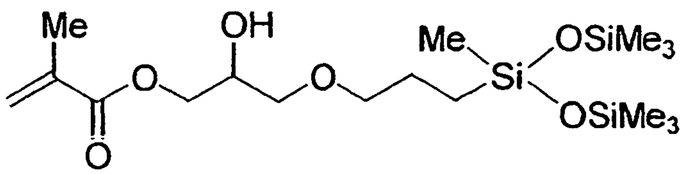

(m1-2)

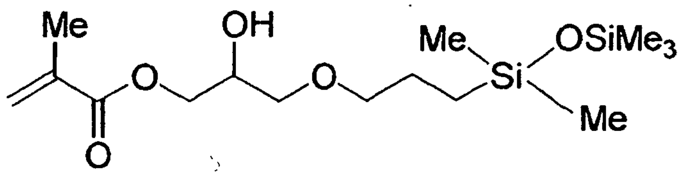

(m1-3)

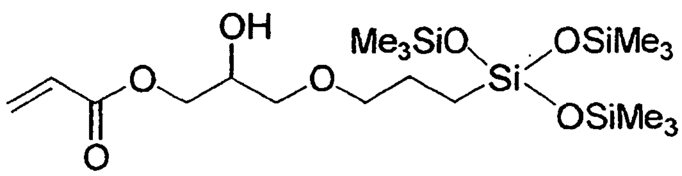

(m1-4)

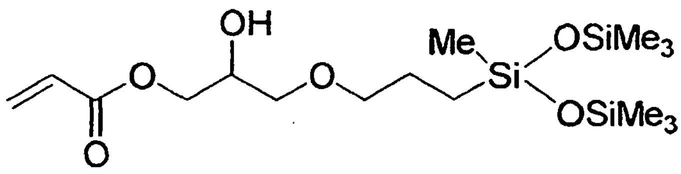

(m1-5)

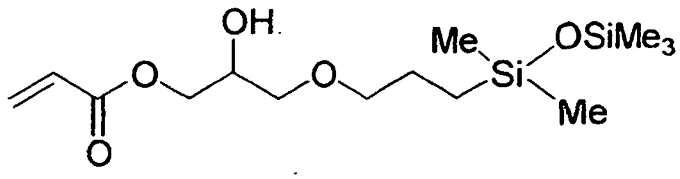

(m1-6)

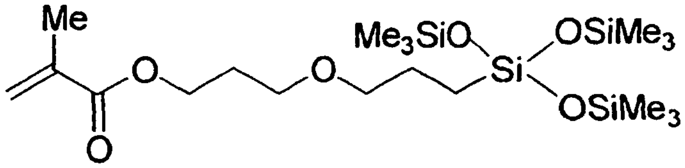

(m1-7)

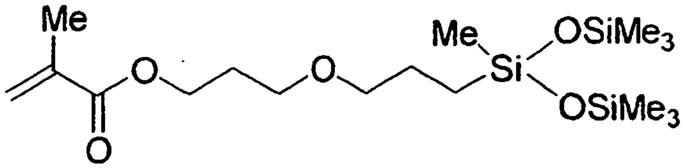

(m1-8)

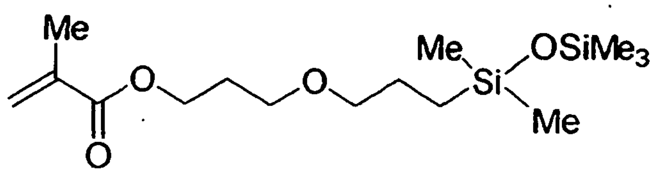

(m1-9)

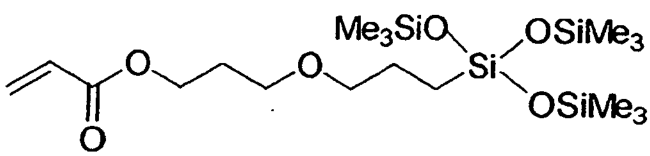

(m1-10)

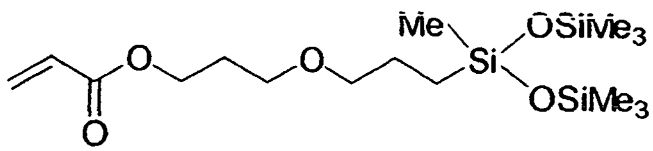

(m1-11)

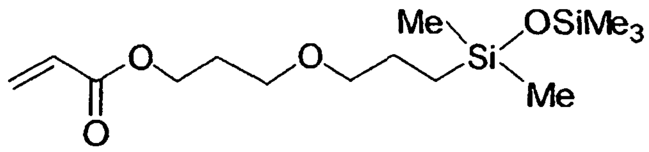

(m1-12)

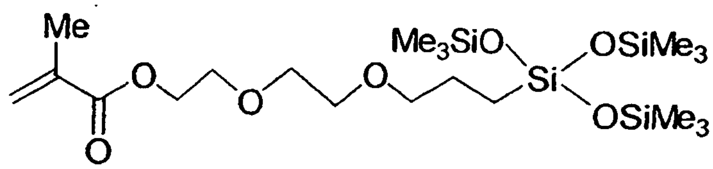

(m1-13)

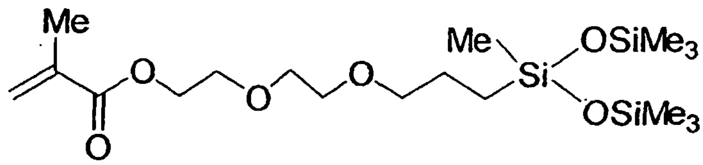

(m1-14)

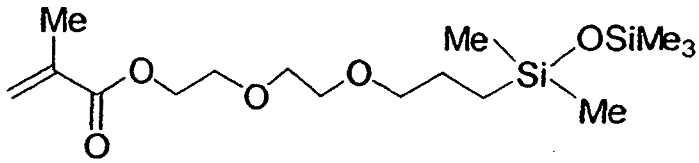

(m1-15)

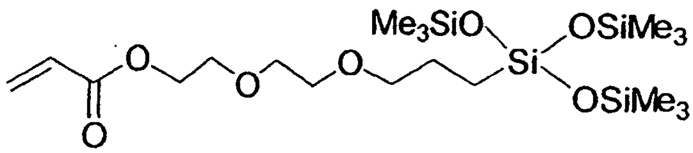

(m1-16)

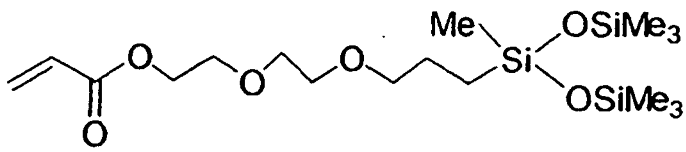

(m1-17)

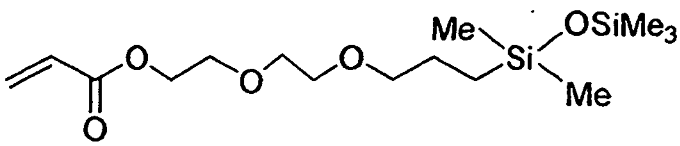

(m1-18)

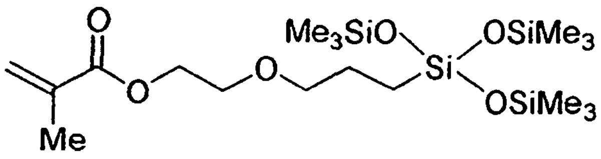

(m1-19)

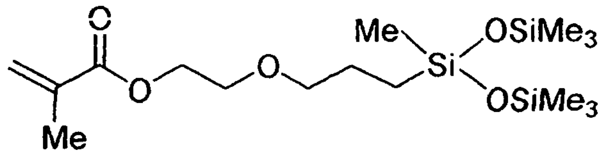

(m1-20)

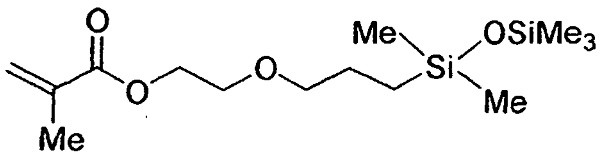

(m1-21)

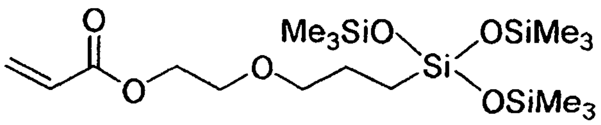

(m1-22)

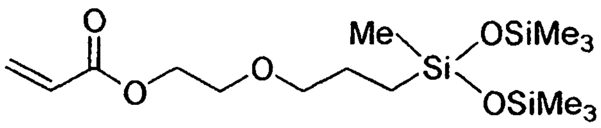

(m1-23)

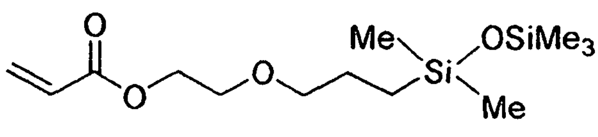

(m1-24)

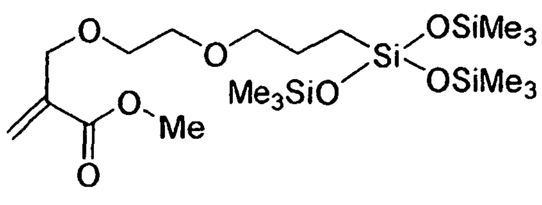

(m1-25)

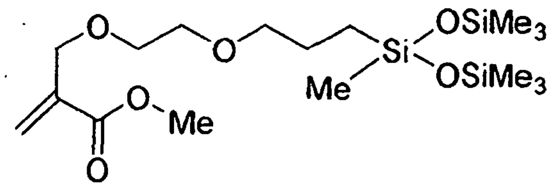
(m1-26)

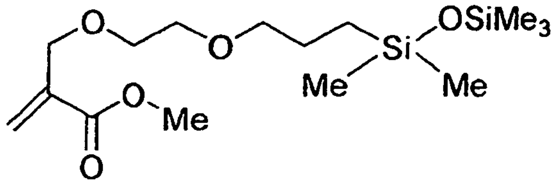
(m1-27)

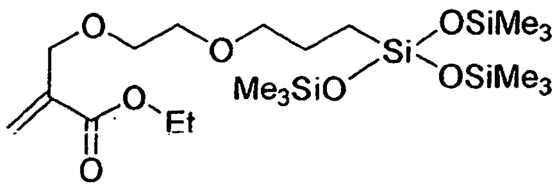
(m1-28)

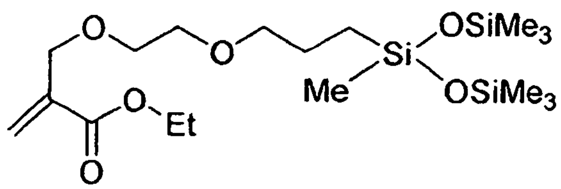
(m1-29)

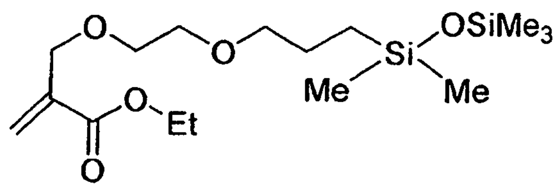
(m1-30)

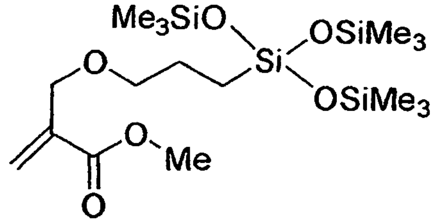
(m1-31)

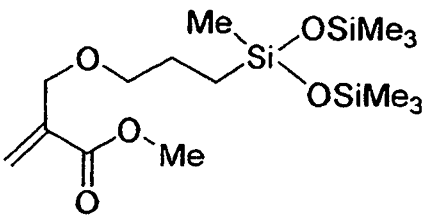

(m1-32)

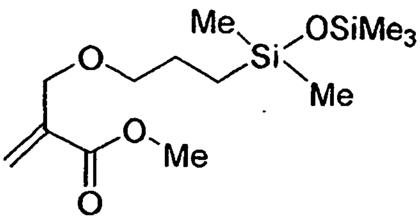

(m1-33)

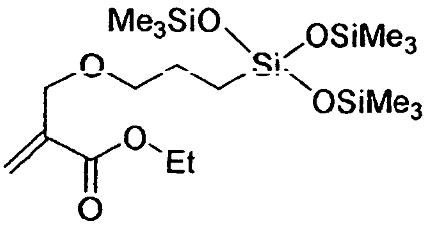

(m1-34)

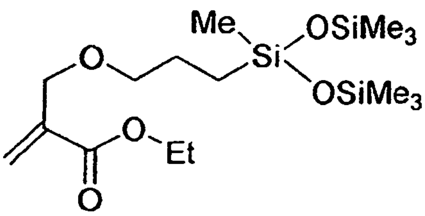

(m1-35)

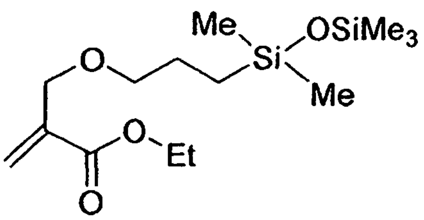

(m1-36)

The values of Q and Z of these monomers are shown in Table 1.

Table 1

| Monomer | Q | Z |
|---|---|---|
| m 1-1 | 0.226 | 2 |

Table continued

| Monomer | Q | Z |
|---|---|---|
| m1-2 | 0.199 | 2 |
| ml-3 | 0.161 | 2 |
| m 1-4 | 1.233 | 2 |
| m 1-5 | 0.206 | 2 |
| ml-6 | 0.168 | 2 |
| ml-7 | 0.234 | 1 |
| m1-8 | 0.207 | 1 |
| m1-9 | 0.169 | 1 |
| m1-10 | 0.241 | 1 |
| m1-11 | 0.215 | 1 |
| m1-12 | 0.176 | 1 |
| ml-13 | 0.220 | 2 |
| m1-14 | 0.193 | 2 |
| ml-15 | 0.155 | 2 |
| m1-16 | 0.226 | 2 |
| ml-17 | 0.199 | 2 |
| ml-18 | 0.161 | 2 |
| ml-19 | 0.241 | 1 |
| ml-20 | 0.215 | 1 |
| ml-21 | 0.176 | 1 |
| ml-22 | 0.248 | 1 |
| ml-23 | 0.223 | 1 |
| ml-24 | 0.185 | 1 |
| ml-25 | 0.226 | 2 |
| ml-26 | 0.199 | 2 |
| ml-27 | 0.161 | 2 |
| ml-28 | 0.220 | 2 |
| m1-29 | 0.193 | 2 |
| m1-30 | 0.155 | 2 |
| m1-31 | 0.248 | 1 |
| m1-32 | 0.223 | 1 |
| m1-33 | 0.185 | 1 |
| m1-34 | 0.241 | 1 |
| ml-35 | 0.215 | 1 |
| ml-36 | 0.176 | 1 |

In all of these monomers, Q is greater than 0.1 and Z is 1 or greater.

The monomer (M1) is used in an amount of 100 parts by weight, which is the weight standard of the monomer composition of this invention. Several types of the monomers (M1) may be used at the same time. In this case, their

total weight is 100 parts by weight. Table 2 shows specific examples of the monomers (M2). Table 2 also shows the values of Q and Z of each monomer.

Table 2

| Monomer | Q | Z |
|---|---|---|
| 3-methacryloxypropyltris(trimethylsiloxy) silane | 0.266 | 0 |
| 3-acryloxypropyltris(trimethylsiloxy) silane | 0.275 | 0 |
| 3-methacryloxypropylmethylbis(trimethylsiloxy) silane | 0.242 | 0 |
| 3-acryloxypropylmethylbis(trimethylsiloxy) silane | 0.252 | 0 |
| 3-methacryloxypropyldimethyl(trimethylsiloxy) silane | 0.205 | 0 |
| 3-acryloxypropyldimethyl(trimethylsiloxy) silane | 0.216 | 0 |
| 3-methacrylamide propyltris(trimethylsiloxy) silane | 0.266 | 0 |
| 3-acrylamide propyltris(trimethylsiloxy) silane | 0.276 | 0 |
| 3-methacrylamide 4 propylmethylbis(trimethylsiloxy) silane | 0.242 | 0 |
| 3-acrylamide propylmethylbis(trimethylsiloxy) silane | 0.253 | 0 |
| 3-methacrylamide propyldimethyl(trimethylsiloxy) silane | 0.205 | 0 |
| 3-acrylamide propyldimethyl(trimethylsiloxy) silane | 0.217 | 0 |
| [tris(trimethylsiloxy) styrene | 0.281 | 0 |
| [bis(trimethylsiloxy)methylsilyl]styrene | 0.260 | 0 |
| [(trimethylsiloxy)dimethylsilyl] styrene | 0.224 | 0 |
| N-[3-[tris(trimethylsiloxy)silyl]propyl] vinyl carbamate | 0.265 | 0 |
| N-[3-[bis(triethylsiloxy)methylsilyl]propyl] vinyl carbamate | 0.241 | 0 |
| N-3-[(trimethylsiloxy)dimethylsilyl]propyl]vinyl carbamate | 0.204 | 0 |

In all of these monomers, Q is greater than 0,2 and Z = 0.

The monomers (M2) are used in amounts of 10 to 1000 parts by weight, and, preferably, of 20 to 500 parts by weight. Several types of the monomers (M2) may be used at the same time. However, in this case, their total weight is in the aforementioned range. When the quantity of (M2) is excessively small, oxygen permeability is decreased, and when the quantity of (M2) is excessively high, hydrophilic properties are decreased. This is not desirable.

Next, we shall present examples of the hydrophilic monomers (M3).

They can include 2-hydroxyethylmethacrylate, 2-hydroxyethylacrylate, diethylene glycol monomethacrylate. diethylene glycol monoacrylate, triethylene glycol monomethacrylate, triethylene glycol monoacrylate, tetraethylene glycol monomethacrylate, tetraethylene glycol monoacrylate, polyethylene glycol monomethacrylate, polyethylene glycol monoacrylate, 2-methoxyethylmethacrylate, 2-methoxyethylacrylate, diethylene glycol monomethyl ether methacrylate, diethylene glycol monomethyl ether acrylate, triethylene glycol monomethyl ether methacrylate, triethylene glycol monomethyl ether acrylate, tetraethylene glycol monomethyl ether methacrylate, tetraethylene glycol monomethyl ether acrylate, polyethylene glycol monomethyl ether methacrylate, polyethylene glycol monomethyl ether acrylate, 2-ethoxyethyl methacrylate, 2-ethoxyethyl acrylate, diethylene glycol monoethyl ether methacrylate, diethylene glycol monoethyl ether acrylate, triethylene glycol monoethyl ether methacrylate, triethylene glycol monoethyl ether acrylate, tetraethylene glycol monoethyl ether methacrylate, tetraethylene glycol monoethyl ether acrylate, polyethylene glycol monoethyl ether methacrylate, polyethylene glycol monoethyl ether acrylate, 2-butoxyethyl methacrylate, 2-butoxyethyl acrylate, diethylene glycol monobutyl ether methacrylate, diethylene glycol monobutyl ether acrylate, triethylene glycol monobutyl ether methacrylate, triethylene glycol monobutyl ether acrylate, tetraethylene glycol monobutyl ether methacrylate, tetraethylene glycol monobutyl ether acrylate, polyethylene glycol monobutyl ether methacrylate, polyethylene glycol monobutyl ether acrylate, N-vinylpyrrolidone, N-vinyl folmamide, N-vinyl acetamide, acrylamide, diacetone acrylamide, N,N-dimethyl acrylamide, N,N-diethyl acrylamide, N,N-dipropyl acrylamide, N,N-dibutyl acrylamide, N-acryloyl morpholine, N-acrylóyl piperidine and N-acryloyl pyrrolidine.

Of these, 2-hydroxyethylmethacrylate, N-vinyl pyrrolidone and N,N-dimethyl acrylamide are most desirable because of their superior balance of the mechanical properties and hydrophilic properties of the polymers.

The monomer (M3) is used in amounts of 10 to 1000 parts by weight, and, preferably, 20 to 500 parts by weight. Several types of monomer (M3) may be used at the same time. In this case, their total weight is in the aforementioned range. When the quantity of (M3) is excessively low, hydrophilic properties are decreased, and when the quantity of (M3) is excessively high, oxygen permeability is decreased. This is not desirable.

In this invention, monomers of molecular weights less than 700 are used as the monomers (M1) to (M3). When molecular weight exceeds 700, purification of the monomer by distillation under reduced pressure becomes difficult, with the result that it is difficult to manufacture monomers of high quality. This is not desirable. Further, when (M1) is a macromonomer type of a high molecular weight, there is a tendency for the polymer that is obtained to have a high modulus of elasticity. This is not desirable.

The polymer composition of this invention may contain monomers other than (M1) to (M3). In this case, there are no particular limitations on the monomers as long as they can be copolymerized and monomers having (meth) acryloyl groups, styryl groups, allyl groups, vinyl groups and other copolymerizable carbon-carbon unsaturated bonds can be used.

Below, we shall present several examples. However, they are not limited to these. They can be (meth)acrylic acid, itaconic acid, crotonic acid, cinnamic acid, vinyl benzoic acid, alkyl (meth)acrylates such as methyl (meth)acrylate and ethyl (meth)acrylate, polyfunctional (meth)acrylates such as polyalkylene glycol mono(meth)acrylate, polyalkylene glycol monoalkyl ether (meth)acrylate, polyalkylene glycol bis(meth)acrylate, trimethylolpropanetris (meth)acrylate, pentaerythritoltetrakis (meth)acrylate and siloxane macromers having carbon-carbon unsaturated bonds in both terminals, halogenated alkyl (meth)acrylates such as trifluoroethyl (meth)acrylate and hexafiuoroisopropyl (meth)acrylate, aromatic vinyl monomers such as styrene, $\alpha$-methylstyrene and vinyl pyridine, maleimides and vinyl esters such as vinyl acetate.

The content of monomers other than (M1) to (M3) should be less than 100 parts by weight and preferably, less than 50 parts by weight, per 100 parts by weight of (M1). When the content of monomers other than (M1) to (M3) is excessively great, there are deleterious effects on the oxygen permeability, water content and modulus of elasticity of the polymer. This is not desirable.

For the purpose of obtaining polymers of good mechanical properties and of obtaining good resistance to disinfecting solutions and wash solutions, it is desirable to use monomers having two or more copolymerizable carbon-carbon bonds in one molecule as the copolymerization components in the monomer composition of this invention. The copolymerization of monomers having two or more copolymerizable carbon-carbon bonds in one molecule should be less than 50 parts by weight, and, preferably, less than 30 parts by weight, per 100 parts by weight of (M1).

The monomer composition of this invention may also contain ultraviolet absorbents, pigments and colorants. It may also contain ultraviolet absorbents, pigments and colorants having polymerizable groups.

Known methods can be used for polymerization and molding of the monomer compositions of this invention. For example, there is the method in which the monomer composition is once polymerized and molded in the form of a round bar or a plate and then processed into a desired shape by cutting and processing, the mold polymerization method and the spin cast polymerization method.

In order to facilitate polymerization of the monomer compositions of this invention, the addition of thermal polymerization initiators and photopolymerization initiators of which peroxides and azo compounds are representative is desirable. When thermal polymerization is performed, a substance having optimum decomposition characteristics at the desired reaction temperature is selected and used. In general, azo initiators and peroxide initiators having 10 hour half-life temperatures of 40 to 120°C are suitable. Carbonyl compounds, peroxides, azo compounds, sulfur compounds, halogen compounds and metal salts can be cited as photopolyrnerization initiators. These polymerization initiators can be used individually or in mixtures and are used in quantities up to approximately 10 weight %.

A polymerization solvent can be used in polymerization of the monomer composition of this invention. Various organic and inorganic solvents can be used as the solvents and there are no particular limitations on them. Examples that can be cited include water, alcohol solvents such as methyl alcohol, ethyl alcohol, normal propyl alcohol, isopropyl alcohol, normal butyl alcohol, isobutyl alcohol and tert-butyl alcohol, glycol ether solvents such as methyl cellosolve, ethyl cellosolve, isopropyl cellosolve, butyl cellosolve, propylene glycol monomethyl ether, ethylene glycol dimethyl ether, diethylene glycol dimethyl ether and triethylene glycol dimethyl ether, ester solvents such as ethyl acetate, butyl acetate, amyl acetate, ethyl lactate, methyl benzoate and ethylene glycol diacetate, aliphatic hydrocarbon solvents such as normal hexane, normal heptane and normal octane, alicyclic hydrocarbon solvents such as cyclohexane and ethyl cyclohexane, ketone solvents such as acetone, methyl ethyl ketone and methyl isobutyl ketone, aromatic hydrocarbon solvents such as benzene, toluene and xylene and petroleum solvents. They can be used individually or in mixtures.

Known methods can be used as the polymerization and molding methods of the monomer compositions of this invention. For example, there is the method in which the monomer composition is once polymerized and molded in the form of a round bar or a plate and then processed into a desired shape by cutting and processing, the mold polymerization method and the spin cast polymerization method.

As an example, we shall now describe the case in which the monomer composition of this invention is obtained by the mold polymerization method.

The monomer composition is filled into the space of two molds having a fixed shape. Photopolymenzation or thermal polymerization is performed and it is formed to the shape of the mold. The mold can be made of resin, glass, ceramics or metal. In the case of photopolymerization, a material that is optically transparent is used, and, ordinarily, resin or glass is used In many cases, when a polymer is manufactured, a space is formed by the two opposing molds and the space is filled with the monomer composition. Depending on the shape of the mold and the properties of the monomer composition, a gasket may be used for the purpose of conferring a fixed thickness on the polymer and of preventing leakage of the filled monomer composition solution. The mold into the space of which the monomer composition is filled is then irradiated with active light rays such as ultraviolet rays or is introduced into an oven or solution tank and is heated and polymerized. The two methods can also be used in combination, with thermal polymerization being performed after photopolymerization, or, conversely, it can be photopolymerization being performed after thermal polymerization. In the case of photopolymerization, for example, light containing a large quantity of ultraviolet rays is usually irradiated for a short time (ordinarily less than 1 hour) using a mercury lamp or an insect attraction lamp as the light source. When thermal polymerization is performed, the temperature is gradually raised from close to room temperature, being increased to a temperature of 60°C to 200°C over a period of several hours to several tens of hours. These conditions are desirable for the purpose of maintaining the optical homogeneity and quality of the polymer and increasing reproducibility.

The polymer of this invention can be subjected to modification treatments by various methods. It is desirable to perform said modification treatment for the purpose of increasing surface water leakage capacity.

Specific modification methods of the polymer can include the use of electromagnetic waves (including light) irradiation, plasma irradiation, chemical vapor deposition treatments such as vaporization and sputtering, heating treatments, treatment with bases, treatment with acids and other suitable surface treatment agents and combinations of these treatments. Of these modification procedures, treatment with bases and treatment with acids are desirable because they are simple.

Examples of treatments with bases and treatments with acids that can be cited include a method in which the polymer is brought into contact with a basic or acidic solution and a method in which the polymer is brought into contact with a basic or acidic gas. More specific examples include, for example, methods in which the polymer is immersed in a basic or acidic solution, methods in which a basic or acidic solution or basic or acidic gas is sprayed at the polymer, methods in which the basic or acidic solution is applied to the polymer with a spatula or brush and methods in which the basic or acidic solution is applied to the polymer by the spin coating method or the dip coating method. The method whereby great modifying effects can be obtained the most simply is the method in which the polymer is immersed in a basic or acidic solution.

There are no particular limitations on temperature when the polymer is immersed in the basic or acidic solution. However, the procedure is usually performed in a temperature range of -50°C to 300°C. When workability is considered, a temperature range of -10°C to 150°C is preferable and -5°C to 60°C is more preferable.

The optimum period for immersion of the polymer in the basic or acidic solution varies depending on the temperature. In general, a period of up to 100 hours is desirable, a period of up to 24 hours is more preferable and a period of up to 12 hours is most preferable. When contact time is too long, workability and productivity deteriorate and there are instances in which there are such deleterious effects as decrease of oxygen permeability and decrease of mechanical properties.

The bases that can be used include alkali metal hydroxides, alkaline earth metal hydroxides, various carbonates, various borates, various phosphates, ammonia, various ammonium salts and various amines. In addition, high molecular weight bases such as polyethylene imines and polyvinyl amines can be used. Of these, alkali metal hydroxides are the most desirable because of their low cost and their great treatment effectiveness.

The acids that can be used include various inorganic acids such as sulfuric acid, phosphoric acid, hydrochloric acid and nitric acid and various organic acids such as acetic acid, formic acid, benzoic acid and phenol and high molecular weight acids such as polyacrylic acids, polymethacrylic acids, polystyrene sulfonic acids and polysulfomethyl styrene. Of these, high molecular weight acids are the most desirable because of their great treatment effectiveness and because they have little deleterious effect on other physical properties.

Various inorganic and organic solvents can be used as solvents of the basic and acidic solutions. For example, they can include water, various alcohols such as methanol, ethanol, propanol, 2-propanol, butanol, ethylene glycol, diethylene glycol, triethylene glycol, tetraethylene glycol, polyethylene glycol and glycerol, various aromatic hydrocarbons such as benzene, toluene and xylene, various aliphatic hydrocarbons such as hexane, heptane, octane, decane, petroleum ether, kerosene, ligroin and paraffin, various ketones such as acetone, methyl ethyl ketone and methyl isobutyl ketone, various esters such as ethyl acetate, butyl acetate, methyl benzoate and dioctyl phthalate, various ethers such as diethyl ether, tetrahydrofuran, dioxane, ethylene glycol dialkyl ether, diethylene glycol dialkyl ether, triethylene glycol dialkyl ether, tetraethylene glycol dialkyl ether and polyethylene glycol dialkyl ether, various nonprotonic polar solvents such as dimethylformamide, dimethylacetamide, N-methyl-2-pyrrolidone, dimethylirnidazolidinone, hexamethyl phosphoric triamide and dimethyl sulfoxide, halogen solvents such as methylene chloride, chloroform, dichloroethane trichloroethane and trichloroethylene and freon solvents. Of these, water is the most desirable from the standpoints of economic factors, convenience of handling and chemical stability. These solvents can also be used in mixtures of two or more.

The basic and acidic solutions that are used in this invention may also contain components other than the basic substances or acidic substances and the solvents.

After the polymer of this invention has been subjected to treatment with bases or acids, the basic or acidic substance can be removed by washing.

Various inorganic and organic solvents can be used as washing solvents. For example, they can include water, various alcohols such as methanol, ethanol, propanol, 2-propanol, butanol, ethylene glycol, diethylene glycol, triethylene glycol, tetraethylene glycol, polyethylene glycol and glycerol, various aromatic hydrocarbons such as benzene, toluene and xylene, various aliphatic hydrocarbons such as hexane, heptane, octane, decane, petroleum ether, kerosene, ligroin and paraffin, various ketones such as acetone, methyl ethyl ketone and methyl isobutyl ketone, various esters such as ethyl acetate, butyl acetate, methyl benzoate and dioctyl phthalate, various ethers such as diethyl ether, tetrahydrofuran, dioxane, ethylene glycol dialkyl ether, diethylene glycol dialkyl ether, triethylene glycol dialkyl ether, tetraethylene glycol dialkyl ether and polyethylene glycol dialkyl ether, various nonprotonic polar solvents such as dimethylformamide, dimethylacetamide, N-methyl-2-pyrrolidone, dimethylimidazolidinone, hexamethyl phosphoric triamide and dimethyl sulfoxide, halogen solvents such as methylene chloride, chloroform, dichloroethane trichloroethane and trichloroethylene and freon solvents. In general, water is the most desirable. These washing solvents can also be used in mixtures of two or more solvents. The washing solvents may contain components other than the solvents, for example, inorganic salts, surfactants and detergents.

The entire polymer may be subjected to said modification treatment or it may be performed on only a portion of the polymer, for example, the surface. When only the surface is subjected to modification treatment, the aqueous wetting property of the surface only can be improved without making great changes in the polymer as a whole.

The oxygen permeability of this polymer of this invention should be an oxygen permeability coefficient greater than 40 x $10^{-11}$ ($cm^2$/sec) [$mLO_2$/(mL-hPa)], preferably, greater than 50 x $10^{-11}$, ($cm^2$/sec) [$mLO_2$/(mL·hPa)] and most preferably, greater than 60 x $10^{-11}$ ($cm^2$/sec) [$mLO_2$/(mL·hPa)]. By setting the oxygen permeability coefficient in this range, the burden on the eyes can be decreased and continuous wearing is facilitated when used as contact lenses.

Water content should be 15 weight % to 60 weight %, and, preferably, 20 weight % to 50 weight %. When the water content is greater than 15 weight % its action in the eyes is improved when used as a contact lens and continuous wearing is facilitated. When the water content is excessively high, the oxygen permeability coefficient is decreased, for which reason this is not desirable.

The modulus of elasticity should be 65 kPa to 2000 kPa, preferably, 100 kPa to 1400 kPa, and most preferably, 150 kPa to 1000 kPa. When the modulus of elasticity is excessively low, the polymer is too soft, its shape-maintaining capacity deteriorates and it is difficult to handle, for which reason this is not desirable. When the modulus of elasticity is excessively high, it is excessively hard, and, when it is used as a contact lens, comfort on wearing deteriorates, for which reason this is not desirable.

The monomer compositions of this invention and the polymers in which they are used are particularly suited for ophthalmic lenses such as contact lenses, intraocular lenses and artificial corneas.

**Examples**

We shall now describe this invention in specific terms by means of examples.

[Determination Methods]

The various determinations in these examples were performed by the methods described below.

(1) Proton nuclear magnetic resonance spectroscopy

Determinations were performed using a model EX270 manufactured by JEOL [Nihon Denshi]. Chloroform-d was used as the solvent. The chloroform peak was taken as the internal standard (7.26 ppm).

(2) Water content

A sample in the form of a contact lens was used. The sample was dried for 16 hours at 40°C in a vacuum dryer and the weight (Wd) of the sample was determined. Following that, it was immersed in pure water and was impregnated with water overnight in a constant temperature tank at 40°C, after which the water on the surface was wiped off with Kimwipe and its weight (Ww) was measured. The water content was found by the following formula.

$$\text{Water content (\%)} = 100 \times (Ww - Wd) / Ww$$

(3) Oxygen permeability coefficient

The oxygen permeability coefficient of a sample in the shape of a contact lens in water at 35°C was determined using Seikaken-shiki film oxygen permeability meter manufactured by the SEIKI KOGYO Co., Ltd. A film thickness of the sample was adjusted by compiling plural sheets of samples where necessary.

(4) Modulus of elasticity (tensile modulus of elasticity)

A sample [width (smallest part), 5mm; length, 14 mm; thickness, on the order of 0.2 mm] cut from a contact lens shape using a stipulated punch mold was used and determinations were made using a Model RTM-100 Tensilon manufactured by Orientec Corporation. The drawing rate was set to 100 mm/min and the distance between grips was set to 5 mm.

[Example of Synthesis 1]

Synthesis of the compound represented by formula (ml-7)

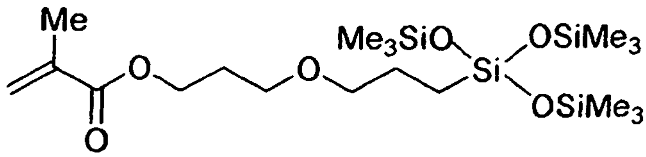

(1) 1,3-propanediol (100 g) and potassium hydroxide (86.7 g) were introduced into a 500 ml three-neck distillation flask equipped with a dropping funnel, a reflux condenser and a stirring blade and the mixture was stirred for about 1 hour at room temperature. Allyl bromide (159 g) was introduced through the dropping funnel and was added dropwise while the mixture was being stirred. After the dropwise addition had been completed, a reaction was carried out for 3 hours at 60°C as the mixture was being stirred. Diethyl ether (250 mL) was added, after which the salt was removed by filtration and the solvent component was removed with a rotary vacuum evaporator. Because the salt again precipitated, it was removed by filtration. Purification was performed by distillation under reduced pressure and 3-allyloxypropanol was obtained as a colorless, transparent liquid.

(2) The 3-allyloxypropanol (15 g) that was synthesized in (1), triethylamine (19.6 g) and tetrahydrofuran (30 mL) were introduced into a 300 mL three-neck distillation flask equipped with a dropping funnel and a stirring blade. The three neck distillation flask was immersed in an ice bath and methacrylic acid chloride (20.2 g) was added dropwise over a period of approximately 30 minutes as the mixture was being stirred. After the dropwise addition was completed, stirring was continued for 2 hours at room temperature. The salt that precipitated was removed by suction filtration. Ethyl acetate (100 mL) was added to the filtrate which was then introduced into a separatory funnel and was washed using saline solution, saturated aqueous solution of sodium hydrogen carbonate and saline solution in that order. Dehydration treatment was performed with anhydrous magnesium sulfate, after which the solvent was removed with a rotary vacuum evaporator. Purification was performed by distillation under reduced pressure and 3-allyloxypropyl methacrylate was obtained as a colorless, transparent liquid.

(3) Chloroplatinic acid 6-hydrate was dissolved in an equal volume of 2-propanol and was diluted to $1.93 \times 10^{-5}$ mol/g with tetrahydrofuran. Hereafter, this solution is called the "catalyst solution."

The 3-allyloxypropyl methacrylate (6.94 g) that was synthesized in (2), toluene (12 g) and the catalyst solution (3.9 g) were introduced into a 100 mL eggplant type distillation flask equipped with a magnetic rotor. The flask was immersed in a water bath and was cooled and trichlorosilane (10.21 g) was added in small amounts at a time as the mixture was being stirred. After it was confirmed that generation of heat was ceased, the flask was hermetically sealed with a septum and was allowed to stand overnight at room temperature. The low boiling point components

were removed by means of a rotary vacuum evaporator, after which purification was performed by distillation under reduced pressure and 3-(3-methacryloxypropoxy) propyl trichlorosilane was obtained as a colorless, transparent liquid.

(4) Hexane (2.4 g), methanol (2.4 g), and water (4.8 g) were introduced into a 200 mL eggplant type distillation flask equipped with a magnetic rotor, the flask was immersed in an ice bath and the contents of the flask were stirred vigorously. A mixture comprised of the 3-(3-methacryloxypropoxy) propyl trichlorosilane synthesized in (3) (4.58 g) and methoxytrimethyl silane (8.94 g) was added dropwise over a 10 minute period. After the dropwise addition was completed, stirring was continued for 4 hours at room temperature. The reaction solution was separated into two layers and the top layer was collected with a separatory funnel. It was washed using a saturated aqueous solution of sodium hydrogen carbonate (3 times) and water (2 times) in that order. Dehydration was performed with anhydrous sodium sulfate, after which the solvent was removed with a rotary vacuum evaporator. Purification was performed by distillation under reduced pressure and a pale yellow transparent liquid was obtained. The proton nuclear magnetic resonance spectrum of this liquid was determined and it was confirmed that this was the compound represented by formula (m1.7).

[Example of Synthesis 2]

Synthesis of the compound represented by formula (m1-10)

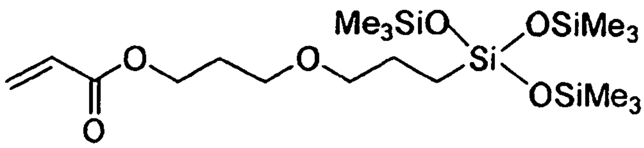

A pale yellow transparent liquid was obtained in the same way as in Example of Synthesis 1 except that acrylic acid chloride was used instead of methacrylic acid chloride. The proton nuclear magnetic resonance spectrum of this liquid was determined and it was confirmed that this was the compound represented by formula (m 1-10).

[Example of Synthesis 3]

Synthesis of the Compound Represented by Formula (m1-13)

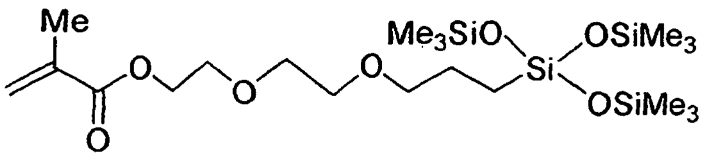

(1) Diethylene glycol (100 g) and potassium hydroxide (62.2 g) were introduced into a 500 ml three-neck distillation flask equipped with a dropping funnel, a reflux condenser and a stirring blade and the mixture was stirred for about 1 hour at room temperature. Allyl bromide (114 g) was introduced through the dropping funnel and was added dropwise while the mixture was being stirred. After the dropwise addition had been completed, a reaction was carried out for 3 hours at 60°C as the mixture was being stirred. Diethyl ether (250 mL) was added, after which the salt was removed by filtration and the solvent component was removed with a rotary vacuum evaporator. Because the salt again precipitated, it was removed by filtration. Purification was performed by distillation under reduced pressure and diethylene glycol monoallyl ether was obtained as a colorless, transparent liquid.

(2) The diethylene glycol monoallyl ether (20 g) that was synthesized in (1), triethylamine (20.7 g) and tetrahydrofuran (30 mL) were introduced into a 300 mL three-neck distillation flask equipped with a dropping funnel and a stirring blade. The three neck distillation flask was immersed in an ice bath and methacrylic acid chloride (21.4 g) was added

dropwise over a period of approximately 5 minutes as the mixture was being stirred. After the dropwise addition was completed, stirring was continued for 3 hours at room temperature. The salt that precipitated was removed by suction filtration. Ethyl acetate (100 mL) was added to the filtrate which was then introduced into a separatory funnel and was washed using saline solution, saturated aqueous solution of sodium hydrogen carbonate and saline solution in that order. Dehydration treatment was performed with anhydrous magnesium sulfate, after which the solvent was removed with a rotary vacuum evaporator. Purification was performed by distillation under reduced pressure and 2.(2.allyloxyethoxy) ethyl methacrylate was obtained as a colorless, transparent liquid.

(3) Chloroplatinic acid 6-hydrate was dissolved in an equal volume of 2-propanol and was diluted to $1.93 \times 10^{-5}$ mol/g with tetrahydrofuran. Hereafter, this solution is called the "catalyst solution."

The 2-(2-allyloxyethoxy) ethyl methacrylate (13.63 g) that was synthesized in (2), toluene (13 g) and the catalyst solution (6.6 g) were introduced into a 100 mL eggplant type distillation flask equipped with a magnetic rotor. The flask was immersed in a water bath and was cooled and trichlorosilane (17.22 g) was added in small amounts at a time as the mixture was being stirred. After it was confirmed that generation of heat was ceased, the flask was hermetically sealed with a septum and was allowed to stand overnight at room temperature. The low boiling point components were removed by means of a rotary vacuum evaporator, after which purification was performed by distillation under reduced pressure and 3-[2-(2-methacryloxyethoxy)ethoxy] propyl trichlorosilane was obtained as a colorless, transparent liquid.

(4) Hexane (6.0 g), methanol (6.0 g), and water (12.0 g) were introduced into a 200 mL eggplant type distillation flask equipped with a magnetic rotor, the flask was immersed in an ice bath and the contents of the flask were stirred vigorously. A mixture comprised of 3-[2-(2-methacryloxyethoxy)ethoxy] propyl trichlorosilane (12.5 g) and methoxytrirnethyl silane (22.3 g) was added dropwise over a 10 minute period. After the dropwise addition was completed, stiffing was continued for 3.5 hours at room temperature. The reaction solution was separated into two layers and the top layer was collected with a separatory funnel. It was washed using a saturated aqueous solution of sodium hydrogen carbonate (3 times) and water (2 times) in that order. Dehydration was performed with anhydrous sodium sulfate, after which the solvent was removed with a rotary vacuum evaporator. Purification was performed by distillation under reduced pressure and a pale yellow transparent liquid was obtained. The proton nuclear magnetic resonance spectrum of this liquid was determined and it was confirmed that this was the compound represented by formula (ml-13).

[Example of Synthesis 4]

Synthesis of the Compound Represented by Formula (m1-25)

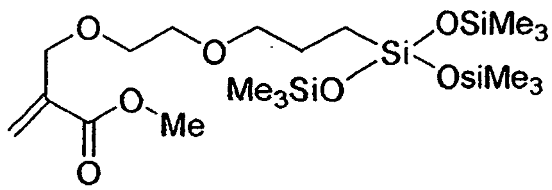

(1) Ethylene glycol monoallyl ether (60 g), triethylamine (18.7 g) and hydroquinone monomethyl ether (21 mg) were added to a 200 mL eggplant type distillation flask and methyl a-bromomethylacry late (30 g) was added dropwise at 0°C. The reaction solution was heated for 24 hours at 100°C. The reaction solution was filtered and the precipitate was removed, after which extraction was performed with ethyl acetate. Washing was performed with a saturated saline solution, drying was effected with magnesium sulfate and the solvent was removed under decreased pressure. The liquid that was obtained was distilled under reduced pressure and a transparent liquid was obtained.

(2) The transparent liquid (8 g) that was obtained in (1) above, toluene (50 mL), 2,6-di-t-butyl-4-methylphenol (14 mg), trichlorosilane (8.7 g) and chloroplatinic acid (IV) 6 hydrate (33 mg) were added to a 50 mL eggplant type distillation flask and the mixture was stirred for 2 hours at room temperature. The solvent of the reaction solution was removed under reduced pressure, the fraction that was obtained was distilled under reduced pressure and a transparent liquid was obtained.

(3) A mixture obtained by mixing the liquid obtained in (2) above (total volume) and trimethyl methoxysilane (38.8 g) was added dropwise at 0°C to a mixed solution of water (100 mL), methanol (50 mL) and hexane (50 mL). The reaction solution was stirred for 16 hours at room temperature, after which the organic layer was washed twice with

a saturated aqueous solution of sodium hydrogen carbonate and once with a saturated saline solution. It was then dried with magnesium sulfate and the solvent was removed under reduced pressure. The liquid that was obtained was distilled under reduced pressure and a colorless, transparent liquids was obtained. The proton nuclear magnetic resonance spectrum of this liquid was determined and it was confirmed that this was the compound represented by formula (ml-25).

[Example of Synthesis 5]

Synthesis of the Compound Represented by Formula (m1-2)

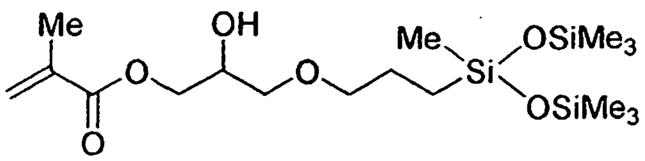

Glycidoxypropylbis(trimethylsiloxy) methyl silane (manufactured by Shin-Etsu Chemical Industrial Company; 101.0 g), 4-t-butylcatechol (0.36 g) and potassium hydroxide (1.95 g) were introduced into a 200 ml three-neck distillation flask equipped with a condensing tube, a stirrer and a dropping funnel and methacrylic acid (51.7 g) was added dropwise over a period of approximately 20 minutes at room temperature in a nitrogen atmosphere as the mixture was being stirred. After the dropwise additions were completed, a reaction was carried out for 9 hours at 100°C in a nitrogen atmosphere as the mixture was being stirred. The mixture was allowed to stand overnight, after which toluene (500 ml) was added and the insoluble matter was removed by filtration. The toluene solution was washed 5 times with 0.5 M sodium hydroxide (approximately 500 ml), after which it was washed 3 times with a saline solution (saturated saline solution diluted 5 times). Anhydrous sodium sulfate was added and dehydration was performed. The sodium sulfate was removed by filtration and 2,6-di-t-butyl-4-methylphenol (0.01 g) and 4-t-butylcatechol (0.01 g) were added, after which the solvent was removed with a rotary vacuum evaporator. The proton nuclear resonance spectrum of this liquid was obtained and it was confirmed that it was the compound represented by formula (ml-2).

[Comparative Example of Synthesis 1]

A macromonomer (hereafter referred to as macromonomer A) of a molecular weight of approximately 4000 having a polydimethylsiloxane component and a polyethylene glycol component was obtained following the method described in Example A-1 (column 46) of U.S. Patent No. 5,776,999.

Example 1 ,

The compound of formula (ml-7) (100 parts by weight) obtained in Example of Synthesis 1, 3-methacyloxypropyltris (trimethylsiloxy) silane (abbreviated as TRIS; 100 parts by weight), N,N-dimethylacrylamide (abbreviated as DMAA; 128 parts by weight), triethylene glycol dimethacrylate (abbreviated as 3G; 3.3 parts by weight), 2-hydroxy-2-methylpropiophenone (brand name, Darocure 1173; manufactured by Ciba Specialty Chemicals Company; 1.6 parts by weight) and diethylene glycol dimethyl ether (32.8 parts by weight) were mixed and stirred. A homogeneous, transparent monomer mixture was obtained. This monomer mixture was deaerated in an argon atmosphere. It was poured into a contact lens mold made of a transparent resin (poly 4-methylpentene-1) in a glove box with a nitrogen atmosphere, it was polymerized by irradiation (1 $mW/cm^2$/10 minutes) using an insect attraction lamp and a contact lens-shaped sample was obtained. The sample that was obtained was immersed for 16 hours at 60°C in an excess quantity of isopropyl alcohol, after which it was immersed in an excess of pure water for 24 hours. Following that, it was immersed and stored in clear pure water. The sample that was obtained was transparent and was not turbid. The water content of this sample was 26%, its oxygen permeability coefficient was $71 \times 10^{-11}$($cm^2$/sec) [$mLO_2$/(mL·hPa)] and its modulus of elasticity was 480 kPa. That is, desirable target ranges are water content of 20 weight % to 50 weight %, an oxygen permeability coefficient of greater than 60 x $10^{-11}$ ($cm^2$/sec) [$mLO_2$/(mL·hPa)] and a modulus of elasticity of 150 kPa to 1000 kPa.

[Examples 2 to 11]

Contact lens-shaped samples were made in the same way as in Example 1 with the monomer compositions shown in Table 3. The polymerization initiators Darocure 1173 and diethylene glycol dimethyl ether were used in the same quantities as in Example 1. The samples that were obtained were transparent and were not turbid. The water content, oxygen permeability coefficients and moduli of elasticity of these samples are shown in Table 3. The water content of these samples was 20 weight % to 50 weight %, their oxygen permeability coefficients were greater than 60 x $10^{-11}$ ($cm^2$/sec) [$mLO_2$/(mL-hPa)] and their moduli of elasticity were 150 kPa to 1000 kPa, all of which values were in the desirable target range.

[Comparative Examples 1 to 7]

Contact lens-shaped samples were made in the same way as in Example 1 with the monomer compositions shown in Table 3. The polymerization initiators Darocure 1173 and diethylene glycol dimethyl ether were used in the same quantities as in Example 1. The samples that were obtained were transparent and were not turbid. Table 3 shows the water content, oxygen permeability coefficients and moduli of elasticity of the samples that were obtained. At least one of the findings for water content, oxygen permeability coeffcients and moduli of elasticity of these samples was outside the desirable target ranges of water content of 20 weight % to 50 weight %, an oxygen permeability coefficients of greater than $60 \times 10^{-11}$ ($cm^2$/sec) [$mLO_2$/(mL-hPa)] and modulus of elasticity of 150 kPa to 1000 kPa.

Table 3

| | (M1) | Parts by weight | (M2) | Parts by weight | (M3) | Parts by weight | Other substances | Parts by weight | Water content (%) | Oxygen permeability coeff. (*) | Modulus of elasticity, kPa |
|---|---|---|---|---|---|---|---|---|---|---|---|
| Example 1 | m1-7 (Example of Synthesis 1) | 100 | TRIS | 100 | DMAA | 128 | 3G | 3.3 | 26 | 71 | 480 |
| Example 2 | m1-10 (Example of Synthesis 2) | 100 | TRIS | 100 | DMAA | 128 | 3G | 3.3 | 30 | 71 | 410 |
| Example 3 | m1-13 (Example of Synthesis 3) | 100 | TRIS | 100 | DMAA | 128 | 3G | 3.3 | 32 | 65 | 380 |
| Example 4 | m1-25 (Example of Synthesis 4) | 100 | TRIS | 100 | DMAA | 128 | 3G | 3.3 | 26 | 71 | 620 |
| Example 5 | m1-2 (Example of Synthesis 5) | 100 | TRIS | 100 | DMAA | 128 | 3G | 3.3 | 32 | 68 | 530 |
| Example 6 | m1-2 (Example of Synthesis 5) | 100 | TRIS | 50 | DMAA | 128 | 3G | 3.3 | 40 | 60 | 520 |
| Example 7 | m1-2 (Example of Synthesis 5) | 100 | TRIS | 300 | DMAA | 128 | 3G | 3.3 | 23 | 90 | 900 |
| Example 8 | m1-2 (Example of Synthesis 5) | 100 | TRIS | 100 | DMAA | 50 | 3G | 3.3 | 20 | 74 | 970 |
| Example 9 | m1-2 (Example of Synthesis 5) | 100 | TRIS | 200 | DMAA | 300 | 3G | 3.3 | 43 | 62 | 550 |
| Example 10 | m1-2 (Example of Synthesis 5) | 100 | TRISA | 100 | DMAA | 128 | 3G | 3.3 | 31 | 68 | 410 |
| Example 11 | m1-2 (Example of Synthesis 5) | 100 | TRISAAm | 100 | DMAA | 128 | 3G | 3.3 | 33 | 66 | 900 |

Table 3 (Continued)

| | (M1) | Parts by weight | (M2) | Parts by weight | (M3) | Parts by weight | Other substances | Parts by weight | Water content (%) | Oxygen permeability coeff. (*) | Modulus of elasticity, kPa |
|---|---|---|---|---|---|---|---|---|---|---|---|
| Comparative Example 1 | m1-2 (Example of Synthesis 5) | 200 | - | 0 | DMAA | 128 | 3G | 3.3 | 32 | 57 | 500 |
| Comparative Example 2 | m1-2 (Example of Synthesis 5) | 100 | TRIS | 100 | - | 0 | 3G | 3.3 | 5 | 105 | 1380 |
| Comparative Example 3 | m1-2 (Example of Synthesis 5) | 100 | TRIS | 5 | DMAA | 128 | 3G | 3.3 | 48 | 49 | 480 |
| Comparative Example 4 | m1-2 (Example of Synthesis 5) | 100 | TRIS | 1100 | DMAA | 128 | 3G | 3.3 | 7 | 96 | 1300 |
| Comparative Example 5 | m1-2 (Example of Synthesis 5) | 100 | TRIS | 100 | DMAA | 5 | 3G | 3.3 | 6 | 80 | 1280 |
| Comparative Example 6 | m1-2 (Example of Synthesis 5) | 100 | TRIS | 100 | DMAA | 1100 | 3G | 3.3 | 70 | 41 | 410 |
| Comparative Example 7 | macromonomer A, (Comparative Example of Synthesis 1) | 100 | TRIS | 241 | DMAA | 172 | 3G | 3.3 | 28 | 45 | 2440 |

*$\times 10^{-11}$($cm^2$/sec)[$mLO_2$/(mL·hPA)]

TRIS: 3-methacryloxypropyltris(methylsiloxy) silane
TRISA : 3-acryloxypropyltris(trimethylsiloxy) silane
TRISAAm: 3-acrylamidopropyltris(trimethylsiloxy) silane
DMAA : N,N-dimethylacrylamide
3G: triethylene glycol dimethacrylate

## Industrial Applicability

By means of this invention, monomer compositions can be provided that give polymers of superior balance of various physical properties such as high oxygen permeability, high water content and low modulus of elasticity. Polymers and ophthalmic lenses comprised of said monomers can also be provided.

## Claims

1. Monomer compositions in which, when Q and Z are defined as indicated below, includes monomer (M1), in which Q is 0.1 or greater, Z is 1 or greater and which has a molecular weight of less than 700, monomer (M2), in which Q is 0.2 or greater, Z = 0 and which has a molecular weight of less than 700, and hydrophilic monomer (M3), in which Q = 0 and which has a molecular weight of less than 700, and in which M1 : M2 : M3 is 100 parts by weight: (10 to 1000 parts by weight) : (10 to 1000 parts by weight).

**Q = (mass of Si atoms in 1 molecule of monomer) / (molecular weight of monomer)**

**Z = (number of ether oxygens in 1 molecule of monomer) + (number of hydroxyl groups in 1 molecule of monomer)**

2. Monomer compositions as described in Claim 1 in which M1 : M2 : M3 is 100 parts by weight: (20 to 500 parts by weight) : (20 to 500 parts by wehgt).

3. Polymers comprised of the monomer compositions described in Claim 1.

4. Ophthalmic lenses in which the polymers described in Claim 3 are used.

5. Contact lenses in which the polymers described in Claim 3 are used.

## Revendications

1. Compositions de monomères dans lesquelles, lorsque Q et Z sont définis de la manière indiquée ci-dessous, sont inclus le monomère (M1), dans lequel Q vaut 0,1 ou plus, Z vaut 1 ou plus et qui a un poids moléculaire inférieur à 700, le monomère (M2), dans lequel Q vaut 0,2 ou plus, Z = 0 et qui a un poids moléculaire inférieur à 700, et un monomère hydrophile (M3), dans lequel Q = 0 et qui a un poids moléculaire inférieur à 700, et dans lesquelles M1: M2:M3 est de 100 parties en poids:(10 à 1000 parties en poids):(10 à 1000 parties en poids).

Q = (masse des atomes de Si dans 1 molécule de monomère)/(poids moléculaire du monomère)

Z = (nombre d'oxygènes d'éther dans 1 molécule de monomère) + (nombre de groupes hydroxyle dans 1 molécule de monomère)

2. Compositions de monomères telles que décrites dans la revendication 1 dans lesquelles M1 :M2 :M3 est de 100

parties en poids: (20 à 500 parties en poids) (20 à 500 parties en poids).

3. Polymères composés des compositions de monomères décrites dans la revendication 1.

4. Lentilles ophtalmiques dans lesquelles les polymères décrits dans la revendication 3 sont utilisés.

5. Lentilles de contact dans lesquelles les polymères décrits dans la revendication 3 sont utilisés.

## Patentansprüche

1. Monomerzusammensetzungen, die, wenn Q und Z definiert sind, wie unten angegeben, Monomer (M1), in dem Q 0,1 oder größer ist. Z 1 oder größer ist und das ein Molekulargewicht von weniger als 700 besitzt. Monomer (M2), in dem Q 0,2 oder größer ist, Z = 0 und das ein Molekulargewicht von weniger als 700 besitzt, und hydrophiles Monomer (M3), in dem Q = 0 und das ein Molekulargewicht von weniger als 700 besitzt, einschließen und in denen M1:M2:M3 100 Gewichtsteile:(10 bis 1000 Gewichtsteile):(10 bis 1000 Gewichtsteile) ist.

Q = (Masse von Si-Atomen in 1 Monomermolekül) / (Molekulargewicht des Monomers)

Z = (Anzahl Ethersauerstoffe in 1 Monomermolekül) + (Anzahl Hydroxylgruppen in 1 Monomermolekül)

2. Monomerzusammensetzungen nach Anspruch 1, **dadurch gekennzeichnet, daß** M1:M2:M3 100 Gewichtsteile: (20 bis 500 Gewichtsteile):(20 bis 500 Gewichtsteile) ist.

3. Polymere, die aus den Monomerzusammensetzungen bestehen, die in Anspruch 1 beschrieben sind.

4. Augenlinsen, in denen die in Anspruch 3 beschriebenen Polymere verwendet sind.

5. Kontaktlinsen, in denen die in Anspruch 3 beschriebenen Polymere verwendet sind.